# FASCICULE DE BREVET EUROPEEN

(11) **EP 4 020 755 B1**
(45) Date de publication et mention de la délivrance du brevet: **25.11.2026**
(21) Numéro de dépôt: 21217212.6
(22) Date de dépôt: 22.12.2021
(51) Int. Cl.: H02J 7/00

(54) **DISPOSITIF ET PROCÉDÉ D'ISOLEMENT D'ACCUMULATEUR ÉLECTRIQUE**
ISOLIERVORRICHTUNG UND -VERFAHREN FÜR STROMAKKUMULATOR
DEVICE AND METHOD FOR ISOLATING AN ELECTRIC ACCUMULATOR

(30) Priorité: 23.12.2020 FR 2014096
(43) Date de publication de la demande: 29.06.2022
(73) Titulaire: Commissariat à l'Energie Atomique et aux Energies Alternatives, 75015 Paris (FR)
(72) Inventeur: CHAUVIN, Julien, 38054 GRENOBLE cedex 09 (FR); CHATROUX, Daniel, 38054 GRENOBLE cedex 09 (FR); DAUCHY, Julien, 38054 GRENOBLE cedex 09 (FR); GAILLARD, Frédéric, 38054 GRENOBLE cedex 09 (FR)
(74) Mandataire: INNOV-GROUP

(56) Documents cités:
- US-B2- 10 059 216
- LORENTZ V R H ET AL: "Power antifuse device to bypass or turn-off battery cells in safety-critical and fail-operational systems", 2018 IEEE INTERNATIONAL CONFERENCE ON INDUSTRIAL ELECTRONICS FOR SUSTAINABLE ENERGY SYSTEMS (IESES), IEEE, 31 January 2018 (2018-01-31), pages 56 - 61, XP033336118, DOI: 10.1109/IESES.2018.8349850

## Description

### DOMAINE TECHNIQUE

L'invention se rapporte au domaine de la gestion du stockage d'énergie électrique et concerne plus particulièrement les éléments de sécurité de ce stockage d'énergie.

Les accumulateurs électriques, et en particulier les accumulateurs électrochimiques, sont généralement conditionnés sous forme de batteries, dans lesquelles des éléments unitaires, généralement dénommés cellules, sont connectés en série et/ou en parallèle. L'association de ces cellules en série permet d'obtenir des tensions plus élevées, et leur association en parallèle permet d'obtenir des capacités plus élevées pour des énergies stockées plus importantes.

La plupart des batteries employées dans des domaines aussi divers que les véhicules électriques, le matériel électronique, l'outillage électroportatif, etc. comportent généralement au moins une branche de cellules ou d'accumulateurs en série.

### ART ANTÉRIEUR

Dans les batteries connues qui comportent au moins une branche d'accumulateurs connectés en série, la défaillance de l'un des accumulateurs entraine généralement une mise hors service de l'ensemble des accumulateurs de cette branche.

Les batteries connues sont généralement associées à des circuits de gestion contrôlant par exemple les températures et les tensions des accumulateurs. Ces circuits de gestion peuvent être munis d'éléments coupe-circuit, tels que des transistors ou des relais, qui agissent en cas de défaillance d'un accumulateur, en déconnectant la batterie dans son ensemble ou au moins la branche dans laquelle l'accumulateur défectueux est monté en série avec d'autres accumulateurs. Pour pallier au défaut d'un accumulateur, une branche entière de la batterie, voire l'ensemble de la batterie est ainsi généralement rendue inopérante.

Il existe cependant des solutions pour isoler un accumulateur présentant un défaut au sein d'une batterie. La demande de Brevet US20140272491 décrit un élément de sécurité pour cellule de batterie, comportant une membrane conductrice interne qui est déformée lorsque la pression augmente dans l'accumulateur. Lorsque la pression interne de l'accumulateur dépasse une valeur prédéterminée, la membrane court-circuite les deux pôles de l'accumulateur, ce qui occasionne une coupure du circuit interne à la batterie par un coupe-circuit de protection. Le dispositif d'isolement d'accumulateur électrique décrit permet ainsi d'isoler un accumulateur électrique par rapport au reste du circuit électrique auquel il est connecté, tout en mettant en court-circuit les bornes de la cellule de batterie défectueuse. La cellule défectueuse est ainsi isolée et le circuit électrique continue d'être alimenté par les éventuelles autres cellules qui étaient branchées en série avec la cellule défectueuse.

Un tel dispositif d'isolement d'accumulateur électrique est activé uniquement par un défaut relatif à une augmentation de pression interne d'une cellule de batterie.

Par ailleurs, le contact électrique détaillé dans le document US20140272491, permettant de court-circuiter les bornes de la cellule en défaut, peut être, dans le meilleur des cas, de l'ordre de 1 mΩ. Cette résistance parasite correspond, par exemple pour un courant de 200 A, à une perte de 40 W générant des problématiques de transfert et d'évacuation thermique de cette puissance. La résistance parasite de ce contact est de plus très dépendante de l'état de surface et d'oxydation des pièces venant en contact.

Par ailleurs, la publication scientifique « Power Antifuse Device to Bypass or Turn-off Battery Cells in Safety-Critical and Fail-Operational Systems », V.R.H. Lorentz et al., parue dans la revue IEEE (978-1-5090-4974-5/18, DOI :10.1109/IESES.2018.8349850) décrit un dispositif d'isolement d'accumulateur électrique assimilable à un interrupteur commandé qui est composé de deux conducteurs de puissance imbriqués et séparés par un matériau électriquement isolant. Ce montage est associé à un élément pyrotechnique qui peut être déclenché par un signal. L'élément pyrotechnique, lorsqu'il est activé, permet de faire fondre une réserve de métal d'apport, qui vient réaliser une brasure entre les deux conducteurs de puissance et qui interconnecte ainsi ces conducteurs de puissance par brasage, pour isoler un accumulateur électrique en maintenant la continuité pour le reste du circuit électrique. Des éléments externes à ce dispositif d'isolement sont prévus pour identifier la présence d'un défaut nécessitant l'isolement d'un accumulateur, et de déclencher en conséquence l'élément pyrotechnique relatif à cet accumulateur. US 10 059 216 B2, fig.13, est un autre exemple d'art antérieur.

### EXPOSÉ DE L'INVENTION

L'invention a pour but d'améliorer les dispositifs et procédés d'isolement d'accumulateur électrique de l'art antérieur.

À cet effet, l'invention vise un dispositif d'isolement d'accumulateur électrique conforme à la revendication 1.

Selon un autre objet, l'invention vise un circuit électrique conforme à la revendication 18.

L'expression « la deuxième borne est connectée à une borne de ladite charge » définit ici le fait que cette deuxième borne est soit directement connectée à la charge, soit y est indirectement connectée au travers du deuxième accumulateur et d'autres éventuels accumulateurs supplémentaires.

De même l'expression « la troisième borne est connectée à une autre borne de ladite charge » définit ici le fait que cette troisième borne est soit directement connectée à la charge, soit y est indirectement connectée au travers du deuxième accumulateur et d'autres éventuels accumulateurs supplémentaires.

Selon un autre objet, l'invention vise un procédé d'isolement d'un accumulateur électrique par rapport à un circuit électrique, tel que défini dans la revendication 20.

L'expression « adapté à isoler un accumulateur électrique d'un circuit électrique en assurant la continuité de ce circuit électrique » signifie précisément que le dispositif permet de mettre hors du circuit électrique un accumulateur (notamment parce qu'il est défectueux) et que cet accumulateur est remplacé dans le circuit électrique auquel il était connecté par un pontage (« by-pass », en anglais) permettant de maintenir la continuité dans ce circuit électrique. Lorsque ce circuit électrique comporte une charge alimentée par d'autres accumulateurs électriques en série avec l'accumulateur isolé, l'isolement de ce dernier et le pontage permet aux autres accumulateurs électriques de continuer à alimenter la charge.

Dans le dispositif selon l'invention, la résistance du contact permettant la continuité du circuit électrique dépourvu de l'accumulateur électrique, est à priori inférieure à 100 µΩ, ce qui ne pose aucun problème d'évacuation d'énergie pour la très grande majorité des batteries, y compris les batteries de forte puissance des véhicules électriques.

L'invention est particulièrement avantageuse dans le cas des accumulateurs de technologie Lithium-ion qui présentent l'avantage de stocker des énergies beaucoup plus importantes avec des masses et volumes réduits, tout en étant apte à fournir des puissances élevées à la décharge et supporter des puissances élevées à la charge, donc de pouvoir avoir des temps de charge de quelques dizaines de minutes par exemple. L'inconvénient principal des chimies Lithium-ion est le risque d'emballement thermique pouvant amener à un départ de feu de l'accumulateur concerné par un défaut, une propagation du défaut aux accumulateurs voisins, pouvant même se propager à toute la batterie. Le dispositif d'isolement d'accumulateur électrique selon l'invention permet de prévenir tout risque en isolant un accumulateur défectueux, tout en maintenant une continuité de service, au moins en mode dégradé, de la batterie.

L'invention évite une ouverture globale du circuit et un arrêt de la fourniture d'énergie, suite à la détection d'un défaut.

Actuellement, la plupart des batteries de voitures électriques, par exemple, sont constituées d'une seule branche d'accumulateurs lithium-ion en série. La capacité de ces accumulateurs étant de plusieurs dizaines d'ampères-heures, et la tension globale variant dans la plage 300 V à 400 V. L'invention permet une commutation naturelle ou pilotée entre l'état où l'accumulateur est connecté au sein de la mise en série par la connexion via le fusible, et l'état où l'accumulateur a une de ses bornes déconnectées, un pontage permettant alors de continuer à utiliser le reste des accumulateurs de la mise en série d'accumulateurs.

Vis-à-vis de l'état de l'art qui est de procéder habituellement à quelques mesures de température locale au sein de l'ensemble d'un pack batterie et d'ouvrir la totalité du circuit électrique en cas de défaut, l'invention peut se placer sur chaque accumulateur du pack batterie et peut ouvrir uniquement le circuit de l'accumulateur en défaut tout en assurant un pontage pour le courant, pour la continuité de service. L'invention permet d'accroitre la sécurité d'un pack batterie d'une part en agissant plus rapidement que les moyens de protections thermiques habituels, où il faut que la température se propage à d'autres cellules avant d'être détectée, et d'autre part en assurant la continuité de fonctionnement de l'ensemble, ce qui selon les applications, notamment dans le transport de personne, peut s'avérer être un élément clé de la sécurité.

L'invention permet une modularité dans le déclenchement du dispositif d'isolement. Le déclenchement par un surcourant (une surintensité) échauffant le fusible peut être complétée par une commande issue de l'électronique de gestion de la batterie, ou par tout autre mode de déclenchement connu (par exemple, ajout d'une résistance de chauffage pour déclenchement piloté par l'électronique de gestion).

L'invention peut être externe à l'accumulateur ou peut être intégrée au sein de celui-ci.

Des modes de réalisation de l'invention présentent l'avantage de ne pas nécessiter d'électroniques ni d'alimentation de ces électroniques pour fonctionner. Le déclenchement naturel relatif à une surintensité (ou par la pression dans l'accumulateur, ou encore la température) permet d'assurer des hauts niveaux de sûreté de fonctionnement, sans nécessiter des électroniques redondantes et/ou qualifiées. La sûreté de déclenchement tel que le permet l'invention est plus particulièrement importante pour les applications dont le niveau de sécurité exigé est très élevé comme l'aéronautique par exemple.

Contrairement aux règles de l'art établies pour la protection électrique, selon lesquelles un court-circuit est à éviter autant que possible, l'invention met à profit un court-circuit pour la réalisation des fonctions du dispositif d'isolement.

Une application intéressante de l'invention est le domaine des transports et plus particulièrement les véhicules électriques ou hybrides. En effet, les demandes ainsi que les contraintes dans le domaine des véhicules électriques tendent à s'intensifier tout comme les risques liés à l'utilisation de technologies d'accumulateurs représentant des énergies embarquées de plus en plus importantes en fonction de l'augmentation des autonomies des véhicules. Il est alors capital de fournir des systèmes de sécurité minimisant le risque d'emballement du pack batterie et ce quelle que soit la nature du défaut, interne ou externe.

L'invention permet aussi d'apporter une continuité de service du pack batterie. Pour un véhicule routier, cela permet d'offrir la possibilité d'aller se garer en sécurité, ou de terminer le trajet selon la gravité du défaut ayant déclenché le dispositif d'isolement d'un accumulateur défectueux.

Par ailleurs, les voitures électriques ont actuellement deux batteries, la batterie de traction, classiquement sous 300 V à 400 V, et la batterie accessoire qui est classiquement une batterie au plomb dont la tension nominale est de 12 V. La batterie accessoire, du type de celle des véhicules thermiques, est conservée pour démarrer l'électronique du véhicule, et surtout pour assurer les fonctions de sécurité (éclairage, fonctionnement des feux de détresse, etc.). La batterie de traction n'est actuellement pas considérée comme une source d'énergie suffisamment sure pour assurer ces fonctions, puisqu'un défaut interne à la batterie sur l'un quelconque de ses accumulateurs provoque l'ouverture des contacteurs de la batterie et la déconnexion de celle-ci. Avec l'invention, la continuité de service obtenue peut permettre de modifier l'architecture électrique du véhicule en vue de supprimer la batterie accessoire puisque la batterie principale peut assurer la continuité de service en cas d'accident.

Le fait que, actuellement, les voitures électriques n'offrent pas de continuité de service en cas de défaut d'un accumulateur au sein du pack batterie est accepté du fait de la présence d'un conducteur formé, responsable et attentif à la conduite à bord. Pour les véhicules électriques autonomes en cours de développement, qui prennent en charge tout ou partie de la conduite, il est souhaitable d'assurer une continuité de service pour la sécurité de la conduite. La continuité de service peut aussi être une fonction qui devienne obligatoire pour les véhicules autonomes du fait de l'absence possible de conducteur formé et responsable apte à prendre en charge la conduite ou la mise en sécurité du véhicule en cas de dysfonctionnement.

Pour un avion ou un bateau, la continuité de service apportée par l'invention permet l'utilisation sur des fonctions critiques. En effet, l'invention assure la continuité de service du pack batterie dans le cas d'un défaut d'un accumulateur, ce qui, contrairement à ce qui est habituel, permet au véhicule de continuer à fonctionner avec une autonomie légèrement réduite plutôt que stopper son fonctionnement. Cet avantage peut s'avérer très pertinent dans le domaine de l'aéronautique ou de la marine, où la continuité de service est primordiale. L'invention présentée est tout à fait adaptable sur des cellules prismatiques utilisées dans plusieurs domaines de transports.

L'invention présente l'avantage d'être optionnellement activable par un système électronique externe. Par exemple le dispositif d'isolement peut être piloté par le système d'airbag d'un véhicule, ce qui permettrait d'isoler électriquement la totalité des accumulateurs du circuit de la voiture et contrairement à ce qui est usuel, ne laisserait pas de tension aux bornes du pack, assurant la sécurité lors des manœuvres des organismes de secours du fait de l'absence des risques d'électrisation et de court-circuit.

Cette protection apportée par l'invention est plus particulièrement intéressante en cas d'immersion totale ou partielle du véhicule.

L'invention permet aussi de ponter la totalité des accumulateurs en cas d'un feu de batterie, soit interne à celle-ci, soit consécutive à un feu du véhicule. L'absence de tension du fait du déclenchement de l'invention sur tous les accumulateurs permet aux pompiers d'arroser le véhicule puis de noyer la batterie sans risques électriques et sans génération d'hydrogène par électrolyse de l'eau par les pièces restant classiquement sous tension au sein de la batterie.

Dans le domaine des accumulateurs, les tensions mises en œuvre ne sont que de quelques volts, et les câblages sont réduits. Par rapport aux conditions standards de l'utilisation des fusibles, l'invention doit traiter un arc réduit, sous faible tension, avec une puissance, donnant lieu à la fusion des matériaux et à un arc électrique, qui est réduite, ainsi qu'une énergie dans des inductances de câblage minimisée. Ces caractéristiques de l'application permettent de favoriser la fusion du métal ou de l'alliage métallique du fusible et limiter la vaporisation.

Classiquement, les fusibles utilisés pour des niveaux de courant de plusieurs centaines d'ampères comme c'est le cas pour les véhicules électriques, sont à base de cuivre pour minimiser les pertes résistives du fusible, avec une faible quantité de matière. Dans le cadre de l'invention, le fusible est de préférence réalisé par un métal ou un alliage de métaux à basse température de fusion, par exemple inférieure à 400 °C, et avec une quantité de matière suffisante pour la réalisation d'une brasure sur les conducteurs de pontage, ce qui permet de plus d'employer un boitier (qui se trouvera impacté par le matériau du fusible à l'état liquide) réalisé en un polymère adapté (polyimide par exemple) et à cout réduit.

Le dispositif d'isolement d'accumulateur électrique selon l'invention peut comporter les caractéristiques additionnelles, seules ou en combinaison, telles que définies dans les revendications dépendantes.

### PRÉSENTATION DES FIGURES

D'autres caractéristiques et avantages de l'invention ressortiront de la description non limitative qui suit, en référence aux dessins annexés dans lesquels :
- La figure 1 est un premier exemple de circuit électrique selon l'invention ;
- La figure 2 est un deuxième exemple de circuit électrique selon l'invention ;
- La figure 3 est une vue schématique en coupe d'un dispositif d'isolement d'accumulateur selon un premier mode de réalisation de l'invention ;
- La figure 4 est une vue de dessus des conducteurs de pontage du dispositif de la figure 3 ;
- La figure 5 est une vue de dessus du fusible du dispositif de la figure 3 ;
- La figure 6 illustre le dispositif de la figure 3 après son déclenchement ;
- La figure 7 est une vue similaire à la figure 1 après le déclenchement du dispositif d'isolement ;
- La figure 8 est un troisième exemple de circuit électrique selon l'invention ;
- La figure 9 illustre un dispositif d'isolement d'accumulateur selon un deuxième mode de réalisation de l'invention ;
- La figure 10 illustre un dispositif d'isolement d'accumulateur selon un troisième mode de réalisation de l'invention ;
- La figure 11 illustre un dispositif d'isolement d'accumulateur selon un quatrième mode de réalisation de l'invention ;
- La figure 12 illustre un dispositif d'isolement d'accumulateur selon un cinquième mode de réalisation de l'invention ;
- La figure 13 illustre un dispositif d'isolement d'accumulateur selon un sixième mode de réalisation de l'invention ;
- La figure 14 illustre un dispositif d'isolement d'accumulateur selon un septième mode de réalisation de l'invention ;
- La figure 15 illustre un dispositif d'isolement d'accumulateur selon un huitième mode de réalisation de l'invention, vu en coupe transversale ;
- La figure 16 illustre une variante de réalisation du dispositif d'isolement d'accumulateur, vu en coupe longitudinale.

### DESCRIPTION DÉTAILLÉE

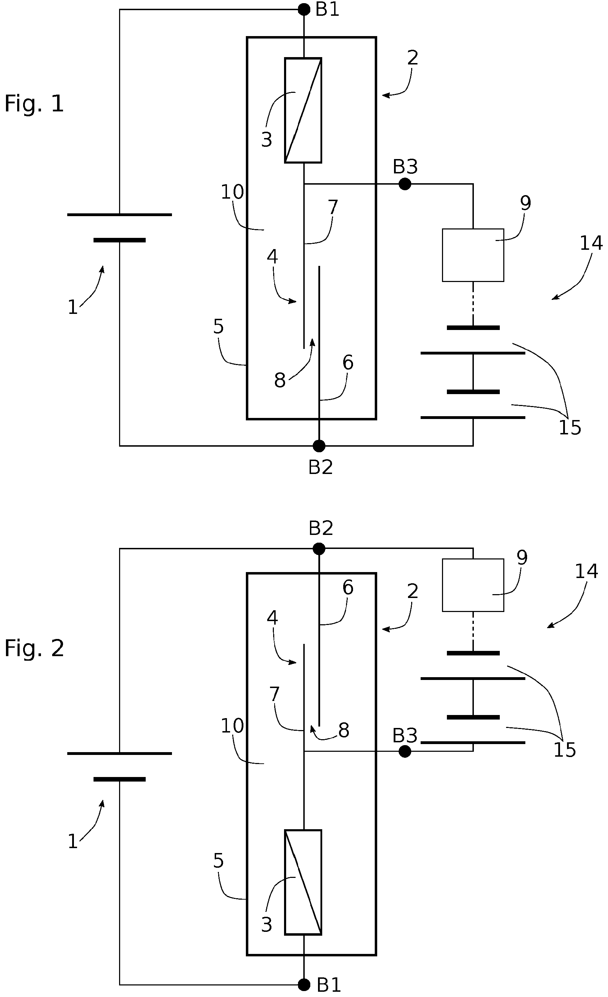

Les figures 1 et 2 illustrent chacune un exemple de circuit électrique dans lequel une batterie d'accumulateurs électriques 1, 15 connectés en série alimentent une charge 9. La charge 9 illustre schématiquement un quelconque circuit ou machine électrique, alimenté par une batterie.

Les circuits illustrés aux figures 1 et 2 sont agencés pour que l'un des accumulateurs (ici l'accumulateur 1) soit associé à un dispositif 2 d'isolement d'accumulateur électrique. L'accumulateur électrique 1 peut être tout type d'accumulateur électrique connu, et notamment un accumulateur de type lithium-ion, ou relatif à d'autres chimies lithiums comme le lithium-métal, ou encore basés sur l'intercalation d'autres ions comme les chimies sodiums-ions ou potassiums-ions.

Cet accumulateur électrique 1 peut être un accumulateur unitaire (une cellule de batterie) ou un ensemble d'accumulateurs montés en série et/ou en parallèle. Quelle que soit la constitution de l'accumulateur 1, le montage illustré permet d'isoler cet accumulateur 1 du circuit électrique 14 auquel il est connecté, tout en assurant un pontage permettant aux autres accumulateurs 15 de continuer à alimenter la charge 9. Dans l'exemple illustré, le circuit électrique 14, constitué des autres accumulateurs 15 et de la charge 9, représente les éléments desquels l'accumulateur 1 peut être isolé en cas de défaut de ce dernier.

Le dispositif d'isolement 2 comporte :
- une première borne B1 qui est connectée à une première borne de l'accumulateur 1 ;
- une deuxième borne B2 qui est connectée à l'autre borne de l'accumulateur 1 et au circuit électrique 14 ; et
- une troisième borne B3 qui est reliée au circuit électrique 14.

Les fonctions remplies par le dispositif d'isolement 2 sont les suivantes :
- coupure entre l'accumulateur 1 et le circuit électrique 14 (schématisée par un fusible 3) ;
- pontage des bornes B2 et B3 (schématisé par un dispositif de pontage 4).

La figure 1 illustre un exemple dans lequel la borne B1 est reliée à la borne positive de l'accumulateur 1, et la borne B2 est reliée à la borne négative de l'accumulateur 1 (isolement de l'accumulateur 1 par coupure de sa borne négative).

La figure 2 illustre quant à elle un exemple dans lequel la borne B1 est reliée à la borne négative de l'accumulateur 1, et la borne B2 est reliée à la borne positive de l'accumulateur 1 (isolement de l'accumulateur 1 par coupure de sa borne positive).

Le dispositif d'isolement 2 peut être un dispositif externe à l'accumulateur 1, et connecté à ce dernier, ou peut être interne au boitier de l'accumulateur 1, ou encore interne au pack batterie contenant l'ensemble des accumulateurs 1, 15.

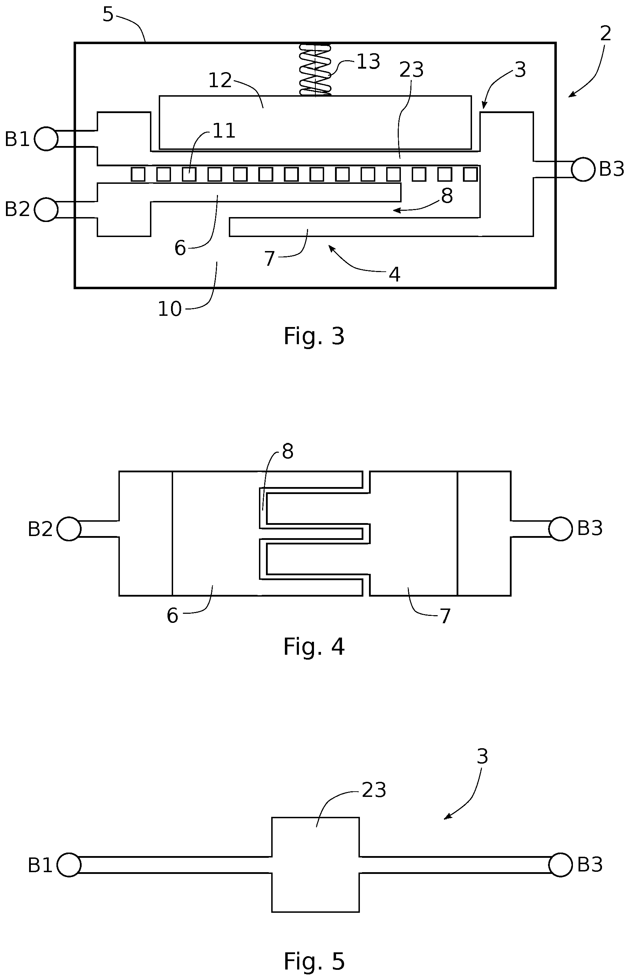

La figure 3 illustre schématiquement le dispositif d'isolement 2 selon un premier mode de réalisation. Selon ce premier mode de réalisation, le dispositif d'isolement 2 est déclenché par une surintensité au niveau des bornes B1 et B3. Le dispositif d'isolement 2 comporte ici un boitier 5 supportant les bornes de connexion B1, B2, B3 qui définit un espace interne constituant une chambre de pontage 10, dans laquelle est disposé un dispositif de pontage 4. Le dispositif de pontage 4 comporte un premier conducteur de pontage 6 et un deuxième conducteur de portage 7, séparés par au moins un interstice 8.

Le premier conducteur de pontage 6 est relié à la borne B2, tandis que le deuxième conducteur de pontage 7 est relié à la borne B3. Dans l'état nominal de fonctionnement du dispositif d'isolement 8, c'est-à-dire lorsqu'il n'est pas déclenché, l'interstice 8 est comblé par un isolant électrique qui est, dans le présent exemple, de l'air ou tout autre gaz adapté.

La figure 3 est une représentation schématique dans laquelle l'interstice 8 est un simple écart entre les deux conducteurs de pontage 6, 7. La vue La figure 4 illustre schématiquement les conducteurs de pontage 6, 7 vus du dessus, et qui comportent chacun, dans cet exemple, une extrémité présentant des motifs géométriques complémentaires, ces motifs étant imbriqués, bien que séparés par l'interstice 8. L'interstice 8 est alors disposé le long de ces motifs géométriques, selon une forme un interstice 8 de forme crènelée, dans cet exemple.

Un fusible 3 est également disposé dans la chambre de pontage 10. Ce fusible 3 comporte, dans cet exemple, un conducteur 23 en matériau fusible qui est relié d'une part à la borne B1 et d'autre part à la borne B3 (et donc également au deuxième conducteur de court-circuit 7). Le fusible 3 peut par ailleurs être constitué d'une mise en parallèle de différentes section fusibles.

La figure 5 est une vue de dessus du fusible 3. La représentation schématique de la figure 5 illustre le fait que le conducteur 23 est destiné à combler l'interstice 8, au moins partiellement, et que la forme ainsi que le volume du conducteur 23 sont adaptés à présenter une quantité de matériau fusible suffisante en vis-à-vis des conducteurs de pontage 6, 7 et plus précisément en vis-à-vis de l'interstice 8.

Un isolant 11 est de plus disposé dans la chambre de pontage 10, entre le fusible 3 et le dispositif de pontage 4. Dans le présent exemple, cet isolant 11 est illustré sous forme d'une feuille de matériau diélectrique qui est perforée ou poreuse, de sorte qu'elle est adaptée à laisser passer le matériau constituant le conducteur 23, lorsque ce matériau est à l'état liquide suite à sa fusion dans le fusible 3.

Optionnellement, un tampon 12 en matériau diélectrique exerce une pression sur le conducteur en matériau fusible 23, en direction des conducteurs de pontage 6, 7, sous l'effet de moyens élastiques, tel qu'un ressort 13.

Le conducteur 23 est constitué d'un matériau présentant un point de fusion choisi pour être atteint lors d'une surintensité dépassant une valeur prédéterminée, de manière à assurer une fonction de fusible classique. Ainsi, en cas par exemple de court-circuit affectant l'accumulateur 1, la fusion du conducteur 23 dans le fusible 3 ouvre le circuit.

Cependant, le fusible 3 est ici agencé de sorte que le volume du matériau fusible constituant le conducteur 23 vienne combler au moins partiellement l'interstice 8, lors de la fusion du conducteur 23.

Le matériau constituant le fusible 3 est de préférence réalisé par un matériau à bas point de fusion (par exemple inférieur à 400° C), ce qui est le cas par exemple d'un alliage plomb-étain ou des alliages sans plomb qui les remplacent pour les brasures. L'utilisation d'un métal ou d'un alliage qui est par nature moins bon conducteur que le cuivre est contraire aux principes généraux de la réalisation des fusibles modernes, et nécessite une quantité de matière plus importante pour constituer la section du fusible 8. Bien que non optimale dans une optique de réalisation d'un fusible classique, cette utilisation d'un métal ou alliage à basse température de fusion est au contraire optimale dans le cadre de l'invention, où l'augmentation de la quantité de matière nécessaire pour la réalisation du fusible 3 va de pair avec une augmentation de la quantité de matériau en fusion qui viendra, lors du déclenchement du dispositif d'isolement 2, combler l'interstice 8.

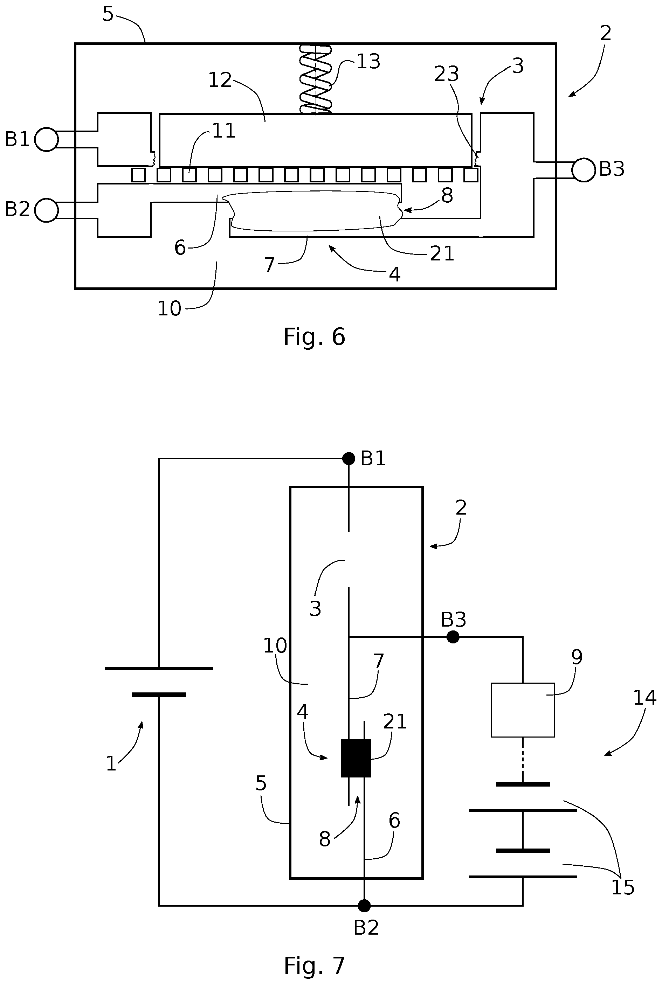

La figure 6 illustre le dispositif d'isolement 2 de la figure 3, après son déclenchement, c'est-à-dire dans une configuration d'isolement de l'accumulateur 1. Le dispositif d'isolement 2 est déclenché par le franchissement d'un seuil d'intensité qui est calibré de manière classique par le dimensionnement de la section et le choix du matériau du fusible 3. Dans le cadre d'une application automobile électrique, par exemple, ce seuil d'intensité est de l'ordre de plusieurs centaines d'ampères.

Le courant en surintensité traversant le fusible 3 provoque l'échauffement du conducteur 23 jusqu'à la fusion du matériau fusible le constituant. Ce matériau, après fusion, passe sous forme liquide, et traverse ensuite l'isolant 11 sous l'effet de la gravité et/ou de la pression du tampon 12.

Le matériau du conducteur 23, à l'état liquide, vient se déposer au niveau de l'interstice 8 et vient constituer une brasure 21 sur les conducteurs de pontage 6, 7.

De préférence, l'état de surface des conducteurs de pontage 6, 7 est préparé (par un traitement de surface, un étamage, ou toute autre mesure adaptée) pour faciliter l'adhésion du matériau du conducteur 23 à l'état liquide.

La fusion du fusible 3 a donc pour conséquences indissociables :
- la coupure du circuit électrique entre les bornes B1 et B3 ;
- l'établissement d'une connexion électrique de pontage, à très faible résistance, entre les bornes B2 et B3.

Le boitier 5 qui délimite la chambre de pontage 10 est réalisé dans un matériau résistant aux températures du matériau du conducteur 23 lorsqu'il est à l'état liquide. Le boitier 5 peut être réalisé par exemple à partir d'une céramique réfractaire résistant à de très hauts niveaux de température si nécessaire. Dans le présent exemple, le matériau du conducteur 23 étant à bas point de fusion, le boitier 5 est de préférence réalisé dans un polymère adapté, par exemple en polyimide. L'isolant 11 peut être également réalisé en polyimide.

Le circuit équivalent (en reprenant l'exemple de la figure 1) dans lequel s'inscrit le dispositif d'isolement 2 une fois déclenché, est illustré à la figure 7. Dans cette configuration d'isolement, l'accumulateur 1 est maintenant isolé du circuit par la déconnexion de sa borne positive, tandis que le circuit électrique 14 est refermé par la brasure 21, de sorte que les autres accumulateurs électriques 15, précédemment présents sur la même branche en série avec l'accumulateur 1, restent connectés en série et restent connectés avec la charge 9.

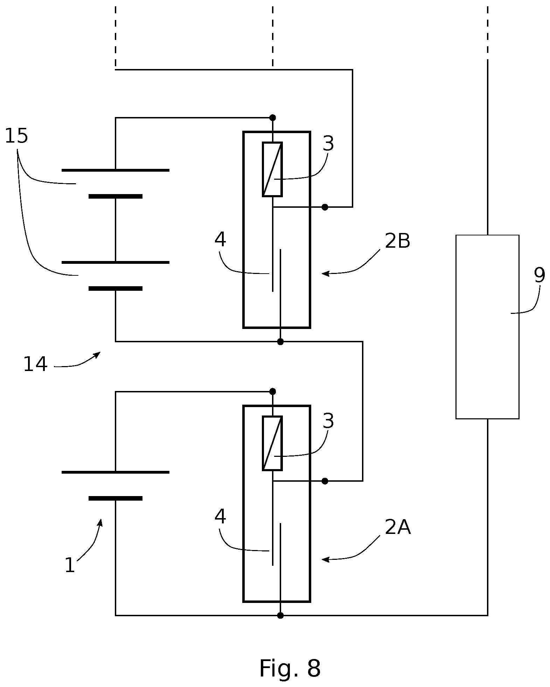

Le dispositif d'isolement 2 agit ici sur l'accumulateur 1. Tous les accumulateurs, ou groupe d'accumulateurs, d'une branche série ou parallèle, peuvent être associés à leur propre dispositif d'isolement. La figure 8 illustre un exemple où l'accumulateur 1 est associé à son dispositif d'isolement 2A, et où un groupe constitué des autres accumulateurs 15 est associé à son propre dispositif d'isolement 2B.

Les accumulateurs ou groupes d'accumulateurs peuvent être ainsi montés en cascade dans un pack batterie, avec autant de dispositifs d'isolement 2 que nécessaire, en vue d'alimenter la charge 9. La défaillance de l'un des accumulateurs va déclencher son dispositif d'isolement 2 et entrainer l'isolement de cet accumulateur comme décrit précédemment.

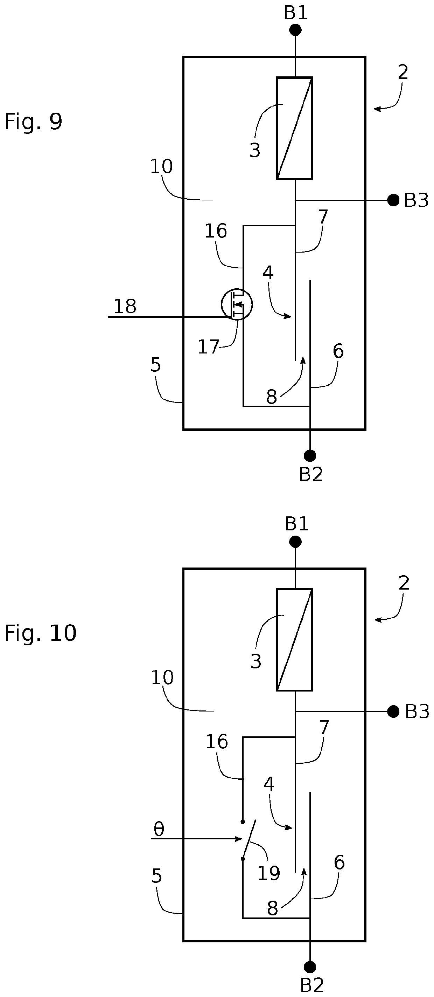

La figure 9 illustre un dispositif d'isolement 2 d'accumulateur électrique selon un deuxième mode de réalisation de l'invention. Dans les différents modes de réalisation, les éléments similaires portent les mêmes numéros de renvoi aux figures.

Selon ce deuxième mode de réalisation, le dispositif d'isolement 2 est constitué de manière similaire au dispositif d'isolement du premier mode de réalisation, si ce n'est qu'à l'intérieur du boitier 5, le dispositif d'isolement 2 comporte une branche de commande 16 connectée en parallèle du dispositif de pontage 4, entre les bornes B2 et B3.

Selon ce deuxième mode de réalisation, le dispositif d'isolement 2 peut non seulement être déclenché de manière naturelle (par une surintensité comme décrit pour le premier mode de réalisation), mais également de manière pilotée. Le pilotage du déclenchement du dispositif d'isolement peut être par exemple réalisé par l'électronique de contrôle du pack batterie (BMS pour « Battery Management System », en anglais) lorsqu'il identifie un défaut concernant l'accumulateur (température trop élevée ou autres paramètres contrôlés).

La branche de commande 16 comporte un interrupteur commandé tel qu'un relai ou, comme dans l'exemple illustré, un transistor de puissance 17. Le transistor 17 est par exemple un transistor MOSFET, qui présente de très faible résistance parasite et qui est apte à laissez-passer des courants de plusieurs centaines d'ampères, compatibles avec la fusion du fusible 3.

La commande 18 du transistor 17 reçoit ainsi un signal correspondant à une instruction d'isolement et entraine la fermeture de la branche de commande 16, ce qui met l'accumulateur 1 en court-circuit et déclenche ainsi le dispositif d'isolement 2 comme décrit précédemment dans le cadre du premier mode de réalisation.

Après le déclenchement du dispositif d'isolement 2, si le transistor 17 est détruit par le courant de court-circuit, il peut néanmoins continuer à laissez-passer ce courant pendant un certain temps. Quoi qu'il en soit, la situation résultant du déclenchement du dispositif d'isolement 2 suite à une commande 18 résulte dans un schéma équivalent correspondant à la figure 7.

Selon ce deuxième mode de réalisation, le dispositif d'isolement présente ainsi :
- un premier mode de déclenchement suite à une surintensité, comme dans le premier mode de réalisation ;
- un deuxième mode de déclenchement commandé par un signal sur la commande 18.

La figure 10 illustre un troisième mode de réalisation qui est similaire au deuxième mode de réalisation, si ce n'est que la branche de commande 16 est ici une branche de commande en température θ.

La branche de commande 16 comporte ici un interrupteur thermique 19 qui est un interrupteur normalement ouvert se fermant lorsque la température θ dépasse un seuil prédéterminé. Selon ce troisième mode de réalisation, le dispositif d'isolement 2 présente ainsi deux modes de déclenchement :
- un premier mode de déclenchement identique à celui du premier mode de réalisation ;
- un deuxième mode de déclenchement intervenant lorsque la température de l'accumulateur 1 (ou d'un autre élément couplé thermiquement au dispositif d'isolement 2) dépasse un certain seuil.

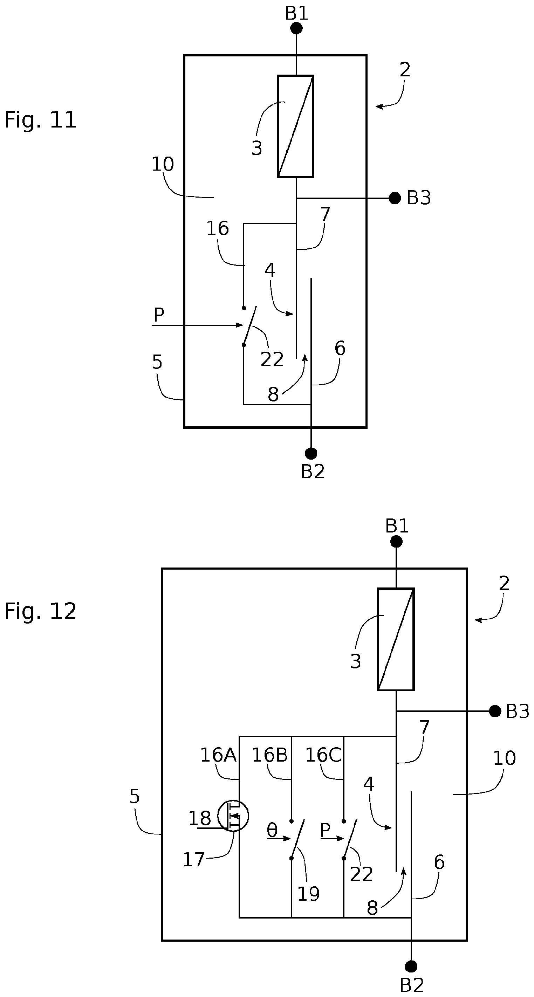

La figure 11 illustre un quatrième mode de réalisation de l'invention qui est similaire au troisième mode de réalisation, si ce n'est que la branche de commande 16 est relative à une commande en pression P.

La branche de commande 16 comporte ici un interrupteur de pression 22 qui est un interrupteur normalement ouvert se fermant lorsque la pression P dépasse un seuil prédéterminé. Selon ce quatrième mode de réalisation, le dispositif d'isolement 2 présente ainsi deux modes de déclenchement :
- un premier mode de déclenchement identique à celui du premier mode de réalisation ;
- un deuxième mode de déclenchement intervenant lorsque la pression interne de l'accumulateur 1 (ou d'un autre élément mécaniquement couplé, du point de vue de la pression, avec le dispositif d'isolement 2) dépasse un certain seuil.

La figure 12 illustre un dispositif d'isolement 2 selon un cinquième mode de réalisation de l'invention, correspondant à une combinaison des modes de réalisation précédents.

Le dispositif d'isolement 2 comporte ici, montées en parallèle du dispositif de pontage 4 :
- une première branche de commande 16A par un signal de commande 18 ;
- une deuxième branche de commande 16B en température, avec un interrupteur 19 commandé en température θ ;
- une troisième branche de commande 16C en pression, avec un interrupteur 22 commandé en pression P.

Selon ce cinquième mode de réalisation, le dispositif d'isolement 2 présente ainsi quatre modes de déclenchement :
- un premier mode de déclenchement suite à une surintensité, comme dans le premier mode de réalisation ;
- un deuxième mode de déclenchement commandé par un signal sur la commande 18, comme dans le deuxième mode de réalisation ;
- un troisième mode de déclenchement intervenant lorsque la température de l'accumulateur 1 (ou d'un autre élément couplé thermiquement au dispositif d'isolement 2) dépasse un certain seuil, comme dans le troisième mode de réalisation ;
- un quatrième mode de déclenchement intervenant lorsque la pression interne de l'accumulateur 1 (ou d'un autre élément mécaniquement couplé, du point de vue de la pression, avec le dispositif d'isolement 2) dépasse un certain seuil, comme dans le quatrième mode de réalisation.

Le dispositif d'isolement 2 peut par ailleurs être complété par toute autre branche de commande 16 comportant un interrupteur adapté à se fermer suivant un paramètre physique particulier qui serait pertinent dans la détection d'un défaut de l'accumulateur 1, pour une application particulière.

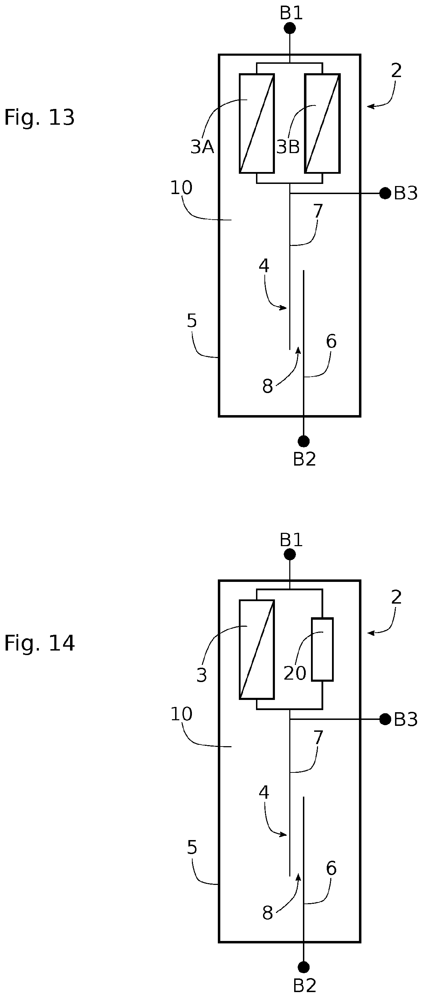

La figure 13 illustre un dispositif d'isolement selon un sixième mode de réalisation de l'invention dans lequel la fonction du fusible 3 est réalisée par deux fusibles 3A, 3B en parallèle.

Le premier fusible 3A et le deuxième fusible 3B comportent chacun de manière similaire un conducteur en matériau fusible. Le conducteur en matériau fusible du premier fusible 3A présente une température de fusion qui est inférieure à la température de fusion du conducteur du deuxième fusible 3B. Les deux fusibles 3A, 3B sont couplés thermiquement. Ils peuvent être simplement disposés ensemble dans la chambre de pontage 10, ou peuvent comporter des éléments spécifiquement prévus pour leur couplage thermique.

Lors du déclenchement du dispositif d'isolement 2, suite à une surintensité, l'apport de matériau en fusion pour le brasage des conducteurs de pontage 6, 7, et le comblement de l'interstice 8, est réalisé en deux temps. L'échauffement des deux fusibles 3A, 3B, suite à la surintensité, provoque tout d'abord la fusion du premier fusible 3A et cette fusion se poursuit même au-delà de la rupture du conducteur du fusible 3A, sous l'effet de l'échauffement concomitant du fusible 3B.

À partir du point de fusion du conducteur du deuxième fusible 3B, ce dernier passe également à l'état liquide et la fonction d'isolement de l'accumulateur 1 est alors remplie.

Cet agencement garantit que, lors de la fusion du fusible 3, au moins le premier fusible 3A voit son conducteur passer en grande partie à l'état liquide, sans inconvénients relatifs à une rupture prématurée qui interromprait la montée en température et la fusion du conducteur.

La figure 14 illustre un septième mode de réalisation de l'invention, dans lequel une résistance de décharge 20 est disposée dans le boitier 5, en parallèle du fusible 3.

Selon ce septième mode de réalisation, lors du déclenchement du dispositif d'isolement 2, l'accumulateur 1 est bien isolé par la fusion du fusible 3A. Cependant, les bornes de l'accumulateur 1 se retrouvent alors, à l'issue du déclenchement, connectées à la résistance de décharge 20. L'accumulateur 1 se décharge alors dans la résistance 20.

Ce mode de réalisation apporte une sécurité supplémentaire du fait de la décharge de l'accumulateur présentant une anomalie, dans la résistance de décharge 20. L'accumulateur en défaut est ainsi non seulement isolé du circuit mais est de plus déchargé de l'énergie qu'il contient.

La résistance de décharge 20 est dimensionnée en fonction de la quantité d'énergie maximale à décharger de l'accumulateur 1, et de la durée souhaitée pour la décharge. La valeur de la résistance de décharge 20 dépend également des possibilités d'évacuation de la chaleur générée. Cette résistance de décharge 20 peut par exemple être dimensionnée pour une décharge lente de l'accumulateur, générant un échauffement limité, et adaptée à des configurations d'évacuation difficile de la chaleur générée. La résistance de décharge 20 peut au contraire être dimensionnée pour une décharge plus rapide, générant un important échauffement. Dans ce dernier cas, la température d'échauffement de la résistance de décharge 20 est mise à profit pour poursuivre l'échauffement du fusible 3 au-delà de la fusion de son conducteur, et ainsi garantir un transfert complet de matière en fusion vers le dispositif de pontage 4. La résistance de décharge 20 complète alors le travail de fusion du fusible 3.

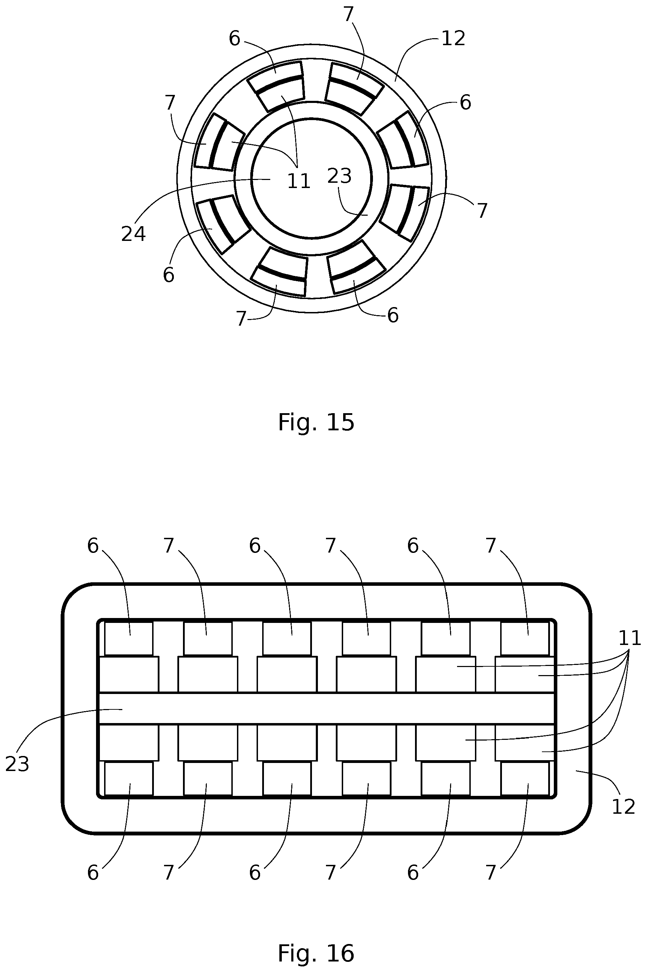

La figure 15 illustre un huitième mode de réalisation de l'invention dans lequel le conducteur en matériau fusible est adapté, lorsqu'il est à l'état liquide, à couler par gravité sur les conducteurs de pontage quelle que soit la position du dispositif d'isolement. À cet effet, les conducteurs de pontage 6, 7 sont agencés tout autour du fusible 3.

En référence à la figure 15, le matériau fusible 23 est agencé sur un noyau central 24. Le matériau fusible 23 peut fondre lorsqu'il est parcouru par un courant supérieur à son courant de seuil. Quelle que soit la position dans l'espace du dispositif d'isolement, le matériau fusible liquide peut passer entre les trous de l'isolant électrique 11 pour assurer la conduction électrique entre certains des doigts des conducteurs de pontage 6 et 7.

Les conducteurs de pontage 6, 7 sont entourés d'un tampon 12 en forme de membrane fermée qui permet, outre la gravité, de favoriser le transfert de matière par une force d'appui de la membrane 12 si celle-ci est élastique, comprimée par une fonction ressort ou en matériau thermorétractable (voir cette variante décrite plus loin).

En variante, la membrane 12 est remplacée par une enveloppe rigide, et le matériau fusible, une fois fondu, n'est déplacé que par la gravité.

Par ailleurs différentes solutions sont possibles pour l'application de la force faisant migrer la matière fondue du matériau fusible. Différents exemples de ces solutions sont listés ci-après.

Selon un premier exemple desdites solutions, plutôt que d'avoir un tampon 12 poussé par un ressort, on peut avoir un tampon en forme de membrane poussée par un matériau élastique (par exemple une mousse), voire un tampon en forme de membrane élastique qui est maintenue déformée par la matière solide du fusible, et qui reprend sa forme lors de la fonte du fusible, chassant ainsi la matière fondue vers la zone des conducteurs de pontage 6, 7. Le tampon 12 (présentant une forme comme sur les figures 3 et 6, ou présentant une forme de membrane comme sur la figure 15) est défini comme un élément qui exerce une pression sur le conducteur en matériau fusible 23, en direction des conducteurs de pontage 6, 7, sous l'effet de moyens élastiques (comme le ressort 13 des figures 3 et 6), ou de l'élasticité du tampon 12 lui-même, notamment lorsqu'il est en forme de membrane (comme sur la figure 15), ou encore de l'effet de la dilatation thermique du tampon 12 ou du rétreint du tampon lorsqu'il est réalisé dans un matériau thermorétractable.

Un deuxième exemple desdites solutions utilise forces de dilatation d'un matériau. Par exemple le tampon 12 (sans ressort cette fois) peut être de type silicone, matériau polymère haute température ayant un fort coefficient de dilatation, ou une mousse de silicone à pores fermés, pour laquelle la dilatation sera principalement provoquée par la dilatation du gaz enfermé dans les pores. Ce tampon 12, par son augmentation de volume suite à l'élévation de température, contraindra le conducteur 23 une fois liquide en direction de la zone des conducteurs de pontage 6, 7.

Un troisième exemple desdites solutions utilise les forces dues à la tension de surface comme solution de transfert de matière. Par exemple, le conducteur 23 en matériau fusible peut présenter une forme allongée à l'état solide, par exemple cylindrique. En fondant, le matériau de ce conducteur 23 prendra une forme de boule à l'état liquide dont la hauteur sera supérieure au diamètre du cylindre initial, permettant de mouiller la zone des conducteurs de pontage 6, 7, même si cette zone est située au-dessus du conducteur 23 en matériau fusible. La tension de surface permet aussi les déplacements sous l'effet de la capillarité.

En référence à la figure 16, un quatrième exemple desdites solutions utilise un polymère thermorétractable. Ainsi, outre la gravité, le transfert de matière peut être favorisé par une force d'appui par le tampon 12 qui est dans cet exemple une membrane entourant le dispositif d'isolement. Cette membrane peut appliquer une force de pression en se resserrant, tendant à chasser le matériau fusible 23 lorsque celui-ci est liquide à travers les trous de 11 pour remplir l'espace entre les doigts des conducteurs de pontage 6 et 7. La force de pression peut être appliquée par le tampon 12 si la membrane le constituant est élastique, pressée par un ressort ou réalisée en matériau thermorétractable. Comme matériau thermorétractable adaptée à la gamme de température d'un alliage d'étain en fusion par exemple, on peut citer le PVDF réticulé.

Le polymère thermorétractable peut entourer les conducteurs de pontage 6, 7, qui eux-mêmes entourent le conducteur 23 en matériau fusible (comme sur la figure 16). En variante, le polymère thermorétractable peut entourer le conducteur 23 en matériau fusible, qui lui-même vient entourer les conducteurs de pontage 6, 7.

Selon un cinquième exemple desdites solutions, le déplacement du conducteur 23 une fois fondu peut aussi être réalisé par des forces magnétiques, le champ magnétique étant soit généré par le courant traversant le dispositif soit fourni par un aimant.

Ainsi, de nombreuses possibilités existent pour faire migrer le conducteur 23, lorsqu'il est à l'état liquide, vers les conducteurs de pontage 6, 7, en employant notamment la gravité, la tension de surface, l'électromagnétisme, un appui mécanique élastique permanent, un appui mécanique thermoactivé (comme la dilatation ou la thermorétractation). Ces possibilités peuvent être mises en œuvre indépendamment ou de manière combinée.

Par ailleurs, différentes alternatives sont possibles pour l'isolation entre la zone du conducteur 23 en matériau fusible et la zone des conducteurs de pontage 6, 7. Par exemple, l'isolant électrique 11 peut être apte à se rétracter lorsqu'il est soumis à la température du conducteur 23 en matériau fusible à l'état liquide, afin de laisser plus de passage à la matière en fusion (grâce à l'usage d'un thermorétractable, par exemple).

Selon un autre exemple, l'isolant électrique 11 peut être choisi dans un matériau qui se voit détruit lorsqu'il est soumis à la température du conducteur 23 en matériau fusible lorsque ce dernier est à l'état liquide.

Des variantes de réalisation peuvent être mises en œuvre. Notamment, toute forme d'imbrication des conducteurs de pontage 6, 7 peut être prévue, notamment en fonction de la section conductrice nécessitée pour l'interstice 8, lorsque ce dernier est comblé par le matériau fusible du fusible 3. Le conducteur 23 en matériau fusible peut être disposé en vis-à-vis du dispositif de pontage 4, comme dans l'exemple de la figure 3, mais ces éléments peuvent aussi être disposés dans toute position mutuelle permettant un transfert du matériau à l'état liquide du conducteur 23 sur le dispositif de pontage 4 (par exemple par des éléments canalisant ce matériau à l'état liquide, et/ou en bénéficiant d'effets de gravité, de capillarité, de tension superficielle de l'état liquide et/ou de l'application d'une force extérieure).

Par ailleurs, les différents modes de réalisation peuvent être combinés entre eux. L'invention est définie dans le jeu de revendications.

## Revendications

1. Dispositif d'isolement (2) d'accumulateur électrique, adapté à isoler un accumulateur électrique d'un circuit électrique en assurant la continuité de ce circuit électrique, **caractérisé en ce qu'**il comporte :
- une première borne (B1) destinée à la connexion du dispositif d'isolement (2) avec ledit accumulateur électrique ;
- une deuxième borne (B2) destinée à la connexion du dispositif d'isolement (2) avec ledit accumulateur électrique et avec ledit circuit électrique ;
- une troisième borne (B3) destinée à la connexion du dispositif d'isolement (2) avec ledit circuit électrique ;
- une chambre de pontage (10) dans laquelle est disposé un dispositif de pontage (4) qui comporte deux conducteurs de pontage (6, 7) séparés par un interstice (8), l'un des conducteurs de pontage étant raccordé à la deuxième borne (B2) et l'autre conducteur de pontage étant raccordé à la troisième borne (B3) ;
- un fusible (3) comportant un conducteur (23) en matériau fusible connecté entre la première borne (B1) et la troisième borne (B3), ce conducteur (23) en matériau fusible étant disposé dans la chambre de pontage (10), et étant adapté à se transférer à l'état liquide sur le dispositif de pontage (4).

2. Dispositif d'isolement selon la revendication 1, **caractérisé en ce que** le conducteur (23) en matériau fusible est disposé en vis-à-vis des conducteurs de pontage (6, 7).

3. Dispositif d'isolement selon l'une des revendications précédentes, **caractérisé en ce que** le fusible (3) est calibré pour assurer la fusion du conducteur (23) en matériau fusible lorsque l'intensité du courant le traversant dépasse une valeur de seuil prédéterminée.

4. Dispositif d'isolement selon l'une des revendications précédentes, **caractérisé en ce que** les conducteurs de pontage (6, 7) sont agencés en dessous du fusible (3), le conducteur (23) en matériau fusible étant adapté, lorsqu'il est à l'état liquide, à couler par gravité sur les conducteurs de pontage (6, 7).

5. Dispositif selon l'une des revendications 1 à 3, **caractérisé en ce que** les conducteurs de pontage (6, 7) sont agencés tout autour du fusible (3), le conducteur (23) en matériau fusible étant adapté, lorsqu'il est à l'état liquide, à couler par gravité sur les conducteurs de pontage (6, 7).

6. Dispositif d'isolement selon l'une des revendications précédentes, **caractérisé en ce qu'**il comporte un tampon (12) sollicitant le conducteur (23) en matériau fusible en direction des conducteurs de pontage (6, 7).

7. Dispositif selon l'une des revendications précédentes, **caractérisé en ce qu'**il comporte un isolant électrique (11) placé entre le fusible (3) et les conducteurs de pontage (6, 7), cet isolant électrique (11) étant adapté à laisser passer le matériau du conducteur (23) en matériau fusible lorsque ce dernier est à l'état liquide.

8. Dispositif d'isolement selon l'une des revendications précédentes, **caractérisé en ce que** le conducteur (23) en matériau fusible présente une température de fusion inférieure à 400°C.

9. Dispositif d'isolement selon l'une des revendications précédentes, **caractérisé en ce que** les conducteurs de pontage (6, 7) présentent des motifs géométriques complémentaires imbriqués, l'interstice (8) étant disposé le long de ces motifs géométriques.

10. Dispositif d'isolement selon l'une des revendications précédentes, **caractérisé en ce que** les conducteurs de pontage (6, 7) présentent un état de surface adapté au brasage par le matériau du conducteur (23) en matériau fusible, lorsque ce dernier est à l'état liquide.

11. Dispositif d'isolement selon l'une des revendications précédentes, **caractérisé en ce qu'**il comporte au moins une branche de commande (16) disposée entre la deuxième borne (B2) et la troisième borne (B3), en parallèle du dispositif de pontage (4), la branche de commande (16) comportant au moins un interrupteur commandé.

12. Dispositif d'isolement selon la revendication 11, **caractérisé en ce que** le au moins un interrupteur commandé de la branche de commande comporte un interrupteur (17) commandé par un signal.

13. Dispositif d'isolement selon l'une des revendications 11 ou 12, **caractérisé en ce que** le au moins un interrupteur commandé de la branche de commande comporte un interrupteur (19) commandé par le franchissement d'un seuil de température.

14. Dispositif d'isolement selon l'une des revendications 11 à 13, **caractérisé en ce que** le au moins un interrupteur commandé de la branche de commande comporte un interrupteur (22) commandé par le franchissement d'un seuil de pression.

15. Dispositif d'isolement selon l'une des revendications précédentes, **caractérisé en ce que** le fusible (3A, 3B) comporte deux conducteurs en matériau fusible montés en parallèle, l'un de ces conducteurs présentant une température de fusion supérieure à la température de fusion de l'autre conducteur.

16. Dispositif d'isolement selon l'une des revendications précédentes, **caractérisé en ce qu'**il comporte une résistance de décharge (20) montée en parallèle du fusible (3).

17. Dispositif d'isolement selon l'une des revendications précédentes, **caractérisé en ce que** le conducteur (23) en matériau fusible est adapté à se transférer à l'état liquide sur le dispositif de pontage (4) par la gravité, et/ou sa tension de surface, et/ou une sollicitation électromagnétique, et/ou un appui mécanique élastique permanent, et/ou un appui mécanique thermoactivé.

18. Circuit électrique comportant un premier accumulateur électrique (1), au moins un deuxième accumulateur électrique (15), et une charge (9) alimentée par ces accumulateurs électriques, **caractérisé en ce qu'**il comporte un dispositif d'isolement (2) d'accumulateur électrique conforme à l'une des revendications 1 à 17 dont :
- la première borne (B1) est connectée à une borne du premier accumulateur électrique (1) ;
- la deuxième borne (B2) est connectée à une autre borne du premier accumulateur électrique (1), et à une borne de ladite charge (9) ;
- une troisième borne (B3) est connectée à une autre borne de ladite charge (9) ;
le dispositif d'isolement (2) d'accumulateur électrique étant adapté à isoler le premier accumulateur électrique (1) du deuxième accumulateur électrique (15) et de ladite charge (9), en assurant la continuité de l'alimentation de ladite charge (9) par le deuxième accumulateur électrique (15).

19. Circuit électrique selon la revendication 18, **caractérisé en ce que** le premier accumulateur électrique (1) et au moins le deuxième accumulateur électrique (15) sont montés en série avec la charge (9) par l'intermédiaire du fusible (3).

20. Procédé d'isolement d'un accumulateur électrique par rapport à un circuit électrique, **caractérisé en ce qu'**il met en œuvre un dispositif d'isolement (2) d'accumulateur électrique selon l'une des revendications 1 à 17, et **en ce qu'**il comporte les étapes suivantes :
- soumettre le fusible (3) à un surcourant qui échauffe le conducteur (23) en matériau fusible au-delà de sa température de fusion ;
- transférer au moins une partie du conducteur (23) en matériau fusible qui est à l'état liquide dans l'interstice (8) séparant les conducteurs de pontage (6, 7).

## Patentansprüche

1. Isolierungsvorrichtung (2) für einen elektrischen Akkumulator, die dazu angepasst ist, einen elektrischen Akkumulator von einer elektrische Schaltungsanordnung zu isolieren und dabei die Kontinuität dieser elektrischen Schaltungsanordnung zu gewährleisten, **dadurch gekennzeichnet, dass** sie Folgendes umfasst:
- einen ersten Anschluss (B1), der zum Verbinden der Isolierungsvorrichtung (2) mit dem elektrischen Akkumulator bestimmt ist;
- einen zweiten Anschluss (B2), der zum Verbinden der Isolierungsvorrichtung (2) mit dem elektrischen Akkumulator und mit der elektrischen Schaltungsanordnung bestimmt ist;
- einen dritten Anschluss (B3), der zum Verbinden der Isolierungsvorrichtung (2) mit der elektrischen Schaltungsanordnung bestimmt ist;
- eine Überbrückungskammer (10), in der eine Überbrückungsvorrichtung (4) angeordnet ist, die zwei durch einen Zwischenraum (8) getrennte Überbrückungsleiter (6, 7) umfasst, wobei einer der Überbrückungsleiter mit dem zweiten Anschluss (B2) verbunden ist und wobei der andere Überbrückungsleiter mit dem dritten Anschluss (B3) verbunden ist;
- eine Sicherung (3), die einen Leiter (23) aus schmelzbarem Material umfasst, der zwischen dem ersten Anschluss (B1) und dem dritten Anschluss (B3) angeschlossen ist, wobei dieser Leiter (23) aus schmelzbarem Material in der Überbrückungskammer (10) angeordnet ist und dazu angepasst ist, im flüssigen Zustand auf die Überbrückungsvorrichtung (4) transferiert zu werden.

2. Isolierungsvorrichtung nach Anspruch 1, **dadurch gekennzeichnet, dass** der Leiter (23) aus schmelzbarem Material gegenüber den Überbrückungsleitern (6, 7) angeordnet ist.

3. Isolierungsvorrichtung nach einem der vorhergehenden Ansprüche, **dadurch gekennzeichnet, dass** die Sicherung (3) so kalibriert ist, dass sie das Schmelzen des Leiters (23) aus schmelzbarem Material gewährleistet, wenn die Intensität des ihn durchlaufenden Stroms einen vorbestimmten Schwellenwert überschreitet.

4. Isolierungsvorrichtung nach einem der vorhergehenden Ansprüche, **dadurch gekennzeichnet, dass** die Überbrückungsleiter (6, 7) unterhalb der Sicherung (3) angeordnet sind, wobei der Leiter (23) aus schmelzbarem Material dazu angepasst ist, wenn es im flüssigen Zustand ist, aufgrund der Schwerkraft auf die Überbrückungsleiter (6, 7) zu fließen.

5. Vorrichtung nach einem der Ansprüche 1 bis 3, **dadurch gekennzeichnet, dass** die Überbrückungsleiter (6, 7) um die Sicherung (3) herum angeordnet sind, wobei der Leiter (23) aus schmelzbarem Material dazu angepasst ist, wenn es im flüssigen Zustand ist, aufgrund der Schwerkraft auf die Überbrückungsleiter (6, 7) zu fließen.

6. Isolierungsvorrichtung nach einem der vorhergehenden Ansprüche, **dadurch gekennzeichnet, dass** sie einen Stempel (12) umfasst, der den Leiter (23) aus schmelzbarem Material in Richtung der Überbrückungsleiter (6, 7) beansprucht.

7. Vorrichtung nach einem der vorhergehenden Ansprüche, **dadurch gekennzeichnet, dass** sie einen elektrischen Isolator (11) umfasst, der zwischen der Sicherung (3) und den Überbrückungsleitern (6, 7) positioniert ist, wobei dieser elektrische Isolator (11) dazu angepasst ist, das Material des Leiters (23) aus schmelzbarem Material durchzulassen, wenn Letzteres im flüssigen Zustand ist.

8. Isolierungsvorrichtung nach einem der vorhergehenden Ansprüche, **dadurch gekennzeichnet, dass** der Leiter (23) aus schmelzbarem Material eine Schmelztemperatur von weniger als 400 °C aufweist.

9. Isolierungsvorrichtung nach einem der vorhergehenden Ansprüche, **dadurch gekennzeichnet, dass** die Überbrückungsleiter (6, 7) verschachtelte komplementäre geometrische Muster aufweisen, wobei der Zwischenraum (8) entlang dieser geometrischen Muster angeordnet ist.

10. Isolierungsvorrichtung nach einem der vorhergehenden Ansprüche, **dadurch gekennzeichnet, dass** die Überbrückungsleiter (6, 7) einen Oberflächenzustand aufweisen, der zum Löten durch das Material des Leiters (23) aus schmelzbarem Material angepasst ist, wenn Letzteres im flüssigen Zustand ist.

11. Isolierungsvorrichtung nach einem der vorhergehenden Ansprüche, **dadurch gekennzeichnet, dass** sie mindestens einen Steuerzweig (16) umfasst, der zwischen dem zweiten Anschluss (B2) und dem dritten Anschluss (B3) parallel zu der Überbrückungsvorrichtung (4) angeordnet ist, wobei der Steuerzweig (16) mindestens einen gesteuerten Schalter umfasst.

12. Isolierungsvorrichtung nach Anspruch 11, **dadurch gekennzeichnet, dass** der mindestens eine steuerbare Schalter des Steuerzweigs einen durch ein Signal gesteuerten Schalter (17) umfasst.

13. Isolierungsvorrichtung nach einem der Ansprüche 11 oder 12, **dadurch gekennzeichnet, dass** der mindestens eine gesteuerte Schalter des Steuerzweigs einen durch das Überschreiten einer Temperaturschwelle gesteuerten Schalter (19) umfasst.

14. Isolierungsvorrichtung nach einem der Ansprüche 11 bis 13, **dadurch gekennzeichnet, dass** der mindestens eine gesteuerte Schalter des Steuerzweigs einen durch das Überschreiten einer Druckschwelle gesteuerten Schalter (22) umfasst.

15. Isolierungsvorrichtung nach einem der vorhergehenden Ansprüche, **dadurch gekennzeichnet, dass** die Sicherung (3A, 3B) zwei parallel geschaltete Leiter aus schmelzbarem Material umfasst, wobei einer dieser Leiter eine Schmelztemperatur aufweist, die höher als die Schmelztemperatur des anderen Leiters ist.

16. Isolierungsvorrichtung nach einem der vorhergehenden Ansprüche, **dadurch gekennzeichnet, dass** sie einen parallel zu der Sicherung (3) geschalteten Entladewiderstand (20) umfasst.

17. Isolierungsvorrichtung nach einem der vorhergehenden Ansprüche, **dadurch gekennzeichnet, dass** der Leiter (23) aus schmelzbarem Material dazu angepasst ist, im flüssigen Zustand aufgrund der Schwerkraft und/oder seiner Oberflächenspannung und/oder einer elektromagnetische Beanspruchung und/oder einer permanenten elastischen mechanischen Abstützung und/oder einer thermisch aktivierten mechanischen Abstützung auf die Überbrückungsvorrichtung (4) transferiert zu werden.

18. Elektrische Schaltungsanordnung, die einen ersten elektrischen Akkumulator (1), mindestens einen zweiten elektrischen Akkumulator (15) und eine durch diese elektrischen Akkumulatoren versorgte Last (9) umfasst, **dadurch gekennzeichnet, dass** sie eine Isolierungsvorrichtung (2) für einen elektrischen Akkumulator nach einem der Ansprüche 1 bis 17 umfasst, bei dem:
- der erste Anschluss (B1) mit einem Anschluss des ersten elektrischen Akkumulators (1) verbunden ist;
- der zweite Anschluss (B2) mit einem anderen Anschluss des ersten elektrischen Akkumulators (1) und mit einem Anschluss der Last (9) verbunden ist;
- ein dritter Anschluss (B3) mit einem anderen Anschluss der Last (9) verbunden ist;
wobei die Isolierungsvorrichtung (2) für einen elektrischen Akkumulator dazu angepasst ist, den ersten elektrischen Akkumulator (1) von dem zweiten elektrischen Akkumulator (15) und von der Last (9) zu isolieren und dabei die Kontinuität der Versorgung der Last (9) durch den zweiten elektrischen Akkumulator (15) zu gewährleisten.

19. Elektrische Schaltungsanordnung nach Anspruch 18, **dadurch gekennzeichnet, dass** der erste elektrische Akkumulator (1) und mindestens der zweite elektrische Akkumulator (15) über die Sicherung (3) in Reihe mit der Last (9) geschaltet sind.

20. Verfahren zur Isolierung eines elektrischen Akkumulators in Bezug auf eine elektrische Schaltungsanordnung, **dadurch gekennzeichnet, dass** es eine Isolierungsvorrichtung (2) für einen elektrischen Akkumulator nach einem der Ansprüche 1 bis 17 einsetzt und dass es die folgenden Schritte umfasst:
- Beaufschlagen der Sicherung (3) mit einem Überstrom, der den Leiter (23) aus schmelzbarem Material über seine Schmelztemperatur hinaus erhitzt;
- Transferieren mindestens eines Teils des Leiters (23) aus schmelzbarem Material, das im flüssigen Zustand ist, in den die Brückenleiter (6, 7) trennenden Zwischenraum (8).

## Claims

1. Battery-isolating device (2) configured to isolate a battery from an electrical circuit while ensuring the continuity of the electrical circuit, **characterized in that** it comprises:
- a first terminal (B1) intended to connect the isolating device (2) to said battery;
- a second terminal (B2) intended to connect the isolating device (2) to said battery and to said electrical circuit;
- a third terminal (B3) intended to connect the isolating device (2) to said electrical circuit;
- a bypass chamber (10) in which is placed a bypass device (4) that comprises two bypass conductors (6, 7) separated by a gap (8), one of the bypass conductors being connected to the second terminal (B2) and the other bypass conductor being connected to the third terminal (B3);
- a fuse (3) comprising a conductor (23) made of meltable material connected between the first terminal (B1) and third terminal (B3), this conductor (23) made of meltable material being placed in the bypass chamber (10), and being configured to transfer in the liquid state to the bypass device (4).

2. Isolating device according to Claim 1, **characterized in that** the conductor (23) made of meltable material is placed facing the bypass conductors (6, 7).

3. Isolating device according to either of the preceding claims, **characterized in that** the fuse (3) is calibrated to ensure that the conductor (23) made of meltable material melts when the magnitude of the current flowing through it exceeds a predetermined threshold value.

4. Isolating device according to any of the preceding claims, **characterized in that** the bypass conductors (6, 7) are arranged below the fuse (3), the conductor (23) made of meltable material being configured, when it is in the liquid state, to flow under gravity onto the bypass conductors (6, 7).

5. Device according to any of Claims 1 to 3, **characterized in that** the bypass conductors (6, 7) are arranged all the way around the fuse (3), the conductor (23) made of meltable material being configured, when it is in the liquid state, to flow under gravity onto the bypass conductors (6, 7).

6. Isolating device according to any of the preceding claims, **characterized in that** it comprises a shoe (12) that urges the conductor (23) made of meltable material in the direction of the bypass conductors (6, 7).

7. Device according to any of the preceding claims, **characterized in that** it comprises an electrical insulator (11) placed between the fuse (3) and bypass conductors (6, 7), this electrical insulator (11) being configured to let the material of the conductor (23) made of meltable material pass when the latter is in the liquid state.

8. Isolating device according to any of the preceding claims, **characterized in that** the conductor (23) made of meltable material has a melting point below 400°C.

9. Isolating device according to any of the preceding claims, **characterized in that** the bypass conductors (6, 7) have interdigitated complementary geometric patterns, the gap (8) being placed along the length of these geometric patterns.

10. Isolating device according to any of the preceding claims, **characterized in that** the bypass conductors (6, 7) have a surface finish configured to be brazed by the material of the conductor (23) made of meltable material, when the latter is in the liquid state.

11. Isolating device according to any of the preceding claims, **characterized in that** it comprises at least one control branch (16) placed between the second terminal (B2) and third terminal (B3), in parallel with the bypass device (4), the control branch (16) comprising at least one controlled switch.

12. Isolating device according to Claim 11, **characterized in that** the at least one controlled switch of the control branch comprises a switch (17) controlled by a signal.

13. Isolating device according to either of Claims 11 and 12, **characterized in that** the at least one controlled switch of the control branch comprises a switch (19) controlled by a temperature threshold being crossed.

14. Isolating device according any of Claims 11 to 13, **characterized in that** the at least one controlled switch of the control branch comprises a switch (22) controlled by a temperature threshold being crossed.

15. Isolating device according to any of the preceding claims, **characterized in that** the fuse (3A, 3B) comprises two conductors made of meltable material mounted in parallel, one of these conductors having a melting point above the melting point of the other conductor.

16. Isolating device according to any of the preceding claims, **characterized in that** it comprises a bleeder resistor (20) connected in parallel with the fuse (3).

17. Isolating device according to any of the preceding claims, **characterized in that** the conductor (23) made of meltable material is configured to transfer in the liquid state to the bypass device (4) under gravity, and/or its surface tension, and/or an electromagnetic force, and/or a continuous elastic mechanical pressure, and/or a thermally activated mechanical pressure.

18. Electrical circuit comprising a first battery (1), at least one second battery (15), and a load (9) supplied with power by these batteries, **characterized in that** it comprises a battery-isolating device (2) according to any of Claims 1 to 17, in which:
- the first terminal (B1) is connected to a terminal of the first battery (1);
- the second terminal (B2) is connected to another terminal of the first battery (1), and to a terminal of said load (9);
- a third terminal (B3) is connected to another terminal of said load (9);
the battery-isolating device (2) being configured to isolate the first battery (1) from the second battery (15) and from said load (9), while ensuring the continuity of the supply of power to said load (9) by the second battery (15).

19. Electrical circuit according to Claim 18, **characterized in that** the first battery (1) and at least the second battery (15) are connected in series with the load (9) via the fuse (3).

20. Method for isolating a battery with respect to an electrical circuit, **characterized in that** it implements a battery-isolating device (2) according to any of Claims 1 to 17, and **in that** it comprises the following steps:
- subjecting the fuse (3) to an over-current that heats the conductor (23) made of meltable material beyond its melting point;
- transferring at least one portion of the conductor (23) made of meltable material that is in the liquid state into the gap (8) separating the bypass conductors (6, 7).
